(19) Europäisches Patentamt
European Patent Office
Office européen des brevets

(11) EP 1 150 641 B1

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(21) Anmeldenummer: **00907530.0**

(22) Anmeldetag: **09.02.2000**

(51) Int Cl.$^7$: **A61K 6/00**, A61K 6/093, C09D 183/14, C08G 77/50

(86) Internationale Anmeldenummer:
**PCT/EP00/01042**

(87) Internationale Veröffentlichungsnummer:
**WO 00/047164 (17.08.2000 Gazette 2000/33)**

(54) **HAFTVERMITTLER FÜR SILICONMATERIALIEN**
BONDING AGENTS FOR SILICONE MATERIALS
AGENTS ADHESIFS POUR MATERIAUX A BASE DE SILICONE

(84) Benannte Vertragsstaaten:
**AT BE CH CY DE DK ES FI FR GB GR IE IT LI LU MC NL PT SE**

(30) Priorität: **09.02.1999 DE 19905224**

(43) Veröffentlichungstag der Anmeldung:
**07.11.2001 Patentblatt 2001/45**

(73) Patentinhaber: **S & C Polymer Silicon- und Composite-Spezialitäten GmbH**
**25335 Elmshorn (DE)**

(72) Erfinder:
- **ENGELBRECHT, Jürgen**
**D-22085 Hamburg (DE)**
- **KIX, Martin**
**D-25482 Appen (DE)**

(74) Vertreter:
**Forstmeyer, Dietmar, Dr. rer. nat., Dipl.-Chem. et al**
**Boeters & Bauer,**
**Bereiteranger 15**
**81541 München (DE)**

(56) Entgegenhaltungen:
**EP-A- 0 632 060**
**EP-A- 0 826 359**
**DE-A- 4 414 837**
**US-A- 5 459 194**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 150 641 B1

## Beschreibung

1. Gegenstand der Erfindung

Die vorliegende Erfindung betrifft Haftvermittler aus Copolymeren von Hydrogensiloxanen und ungesättigten Verbindungen, Lösungen daraus, ihre Verwendung zur dauerhaften Verbindung von Siliconunterfütterungsmassen und Prothesen, ihre Verwendung zur dauerhaften Verbindung von additionsvernetzenden Vinylsiliconabformmassen und Abformlöffeln sowie andere Anwendungen.

Materialien für Zahnprothesen bestehen in der Regel aus Polymethylmethacrylat oder aus Copolymeren verschiedener Methacrylate. Sitzt eine Prothese nicht mehr gut, muß sie erneut hergestellt oder unterfüttert (korrigiert) werden. Diese Unterfütterung kann wiederum mit Prothesenmaterial erfolgen (harte Unterfütterung), es kann aber auch notwendig sein, ein deutlich weicheres Material für diese Zwecke auszuwählen (weichbleibende Unterfütterung). Gerade mit dem Ansteigen des durchschnittlichen Lebensalters steigt die Nachfrage nach letztgenannten weichen Materialien stark.

Übliche weiche Unterfütterungsmaterialien bestehen aus mit Weichmacher versetzten Polymethacrylaten oder aus Silicon. Die mit Weichmacher versetzten Polymethacrylate können auf das (Polymethylmethacrylat-) Prothesenmaterial aufpolymerisiert werden, leiden aber im Laufe von wenigen Monaten durch Herauslösen des Weichmachers unter Härterwerden bis hin zur Versprödung.

Unterfütterungen mit Siliconelastomeren zeigen diese Versprödung nicht. Sie sind dauerhaft weich, andererseits stellt ein festes Verbinden von Silicon mit Polymethacrylaten aber stets ein großes Problem dar. Selbst wenn versucht wird, die Schichten durch Anlösen oder mechanisches Aufrauhen mechanisch zu verbinden, findet nach einigen Wochen oder gar nach einigen Tagen eine Ablösung der Siliconschicht von der Prothese statt.

Es sind einige Wege beschrieben worden, dieses Problem chemisch zu lösen. So werden in der DE 196 35 696 A1 Polymere beschrieben, die reaktive Gruppen enthalten, wie -OH oder -NH, an die unter Wasserstoffabspaltung Hydrogensiliconeinheiten angeknüpft werden. Lösungen eines solchen SiH-Gruppen-haltigen Copolymeren können nach Auftragen auf eine Prothesenoberfläche mit einer darauf applizierten Vinylsiliconschicht reagieren und sich verbinden. Da die Hydrogensiloxaneinheiten über -C-O-Si- bzw. über -C-NH-Si-Bindungen verknüpft sind, sind Klebungen nach dieser Offenlegungsschrift in wässrigem Milieu des Mundes recht hydrolyselabil und eignen sich nur für kurzfristige temporäre Unterfütterungen von wenigen Tagen.

Eine bessere Lösung des Problems ist in der EP 0 632 060 A1 beschrieben. Dort werden Copolymere für diese Zwecke beschrieben, welche durch Copolymerisation von Methylacrylaten mit Vinyloder Allylmethacrylaten hergestellt werden, an deren freie Vinyl- oder Allylgruppen anschließend mit Hilfe eines Platinkatalysators Hydrogensilicone ausreichenden SiH-Gehaltes angeknüpft werden.

Lösungen dieser SiH-gruppenhaltigen Copolymere können ebenfalls nach Auftragen auf eine Prothesenoberfläche mit einer darauf applizierten Vinylsiliconschicht reagieren und sich verbinden. Die Hydrogensiloxaneinheiten sind über Estergruppen -CO-O- an die Polymerkettengerüste geknüpft, besser hydrolysestabil und wirken daher über eine längere Zeit auch im wässrigen Mundmilieu als Haftvermittler zwischen Prothesenmaterial und aufgebrachtem Silikon. Das Herstellungsverfahren ist aber mehrstufig und damit umständlich und teuer und die hergestellten Polymere weisen trotzdem Säure- und Basen-empfindliche Estergruppen auf.

Aufgabe der Erfindung war es daher, neue hydrolysebeständigere Haftvermittler zu finden, die insbesondere als Lösung angewandt zu einem dauerstabilen und feuchtigkeitsfesten Haftverhalten zwischen Prothesenmaterial und weichbleibender Siliconunterfütterung bzw. auch gegebenenfalls zwischen Abformlöffelmaterial und Abformsilicon führen.

Diese Aufgabe wird gelöst durch Haftvermittler, die durch die Copolymerisation von SiH-Gruppen-haltigen Siloxanen mit Vinylgruppen-haltigen Verbindungen erhalten werden können, wobei die Haftvermittler mindestens eine SiH-Gruppe enthalten und die SiH-Gruppen-haltigen Siloxane und die Vinylgruppen-haltigen Verbindungen über C-Si-Bindungen miteinander verknüpft sind.

Erfindungsgemäß und unerwartet konnten somit extrem hydrolysebeständige, SiH-reiche Haftvermittler durch einfache Co-Polymerisation von vorzugsweise keine ungesättigten Gruppen aufweisenden Hydrogensiloxanen (SiH-Gruppen-haltigen Siloxanen) und ungesättigten Verbindungen (insbesondere Vinylgruppen-haltigen Verbindungen) erhalten werden. Daraus bereitete erfindungsgemäße Adhesive weisen insbesondere als Lösungen äußerst gute, dauerhafte und feuchtfeste Hafteigenschaften auf, insbesondere wenn sie als Kleber zwischen anlösbaren Kunststoffen und durch Additionsreaktionen vernetzbaren Siliconmassen verwendet werden.

Die eingesetzten SiH-Gruppen-haltigen Siloxane enthalten vorzugsweise mindestens zwei SiH-Gruppen, vorzugsweise mindestens drei Si-H-Gruppen. Als Vinylgruppen-haltige Verbindungen werden insbesondere Acrylate wie Methacrylate, Vinylbenzole, Vinyl-Cl-C6-alkylether, Alkyl- oder Allylverbindungen, Vinylsilane oder Derivate oder Mischungen von diesen eingesetzt, wobei C1-C6-Monoacrylate, Monovinylbenzole, Monovinyl-C1-C6-alkylether, Monoallylverbindungen, Monovinylsilane oder Derivate oder Mischungen von diesen besonders bevorzugt werden. Gemäß

einer weiteren Ausführungsform können die Vinylgruppen-haltigen Verbindungen mindestens eine weitere funktionelle Gruppe enthalten, wobei als weitere funktionelle Gruppen Hydrogensilyl-, C1-C6-Alkoxysilyl-, Epoxy- oder Aziridin-Gruppen oder Carbon-, Phosphat- oder Phosphonsäuregruppen bevorzugt werden.

Erfindungsgemäß hergestellte Lösungen der Haftvermittler eignen sich z. B. hervorragend als Adhesive zwischen anlösbaren Kunststoffen und Siliconen.

Insbesondere eignen sie sich hervoragend zum Auftragen auf Prothesen, wobei nach Trocknen ein additionsvernetzbares Vinylsiliconunterfütterungsmaterial appliziert werden kann und Prothesenmaterial und Unterfütterungssilicon dauerhaft (z.B. 1 Jahr lang) und feuchtfest miteinander verbunden (verklebt) werden.

Gemäß einer weiteren Ausführungsform eignen sie sich hervorragend zur Haftung von Abformmassen auf Abformlöffeln, z. B. aus Polystyrol, Polycarbonat oder auch einem Metall wie z.B. Aluminium. Bisherige Siliconadhesive (z.B. Lösungen von zähvernetzten Siliconen) für Abformlöffel konnten nie eine solche starke Adhesivität erreichen. Abformlöffel mußten immer zusätzliche mechanische Retentionen aufweisen, um ein Abheben der Abformmasse von seinem Löffel zu verhindern, was immer zu Verfälschungen der Abformdimensionen führte. Erfindungsgemäß hergestellte Lösungen eignen sich also ebenfalls hervorragend zum Auftragen auf anlösbare Kunststoffe, insbesondere Kunststoffabformlöffel, wodurch nach anschließendem Aufbringen von Abformmassen ein irreversibler Verbund zwischen Abformlöffel und Abformvinylsilicon gebildet wird.

Darüber hinaus eignen sich erfindungsgemäße Haftvermittler auch als Vernetzerkomponenten in additionsvernetzenden Siliconformulierungen und als Ausgangssubstanz für Pfropfpolymere.

Erfindungsgemäß werden insbesondere Haftvermittler offenbart, die insbesondere in der längsten Kette (Grundkette) sich wiederholende Einheiten

a) der Formel

(I)

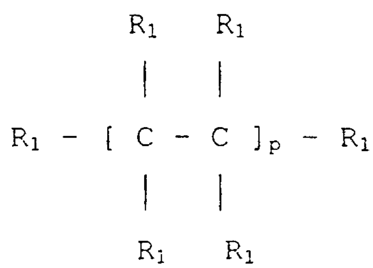

und

b) der Formel

(II)

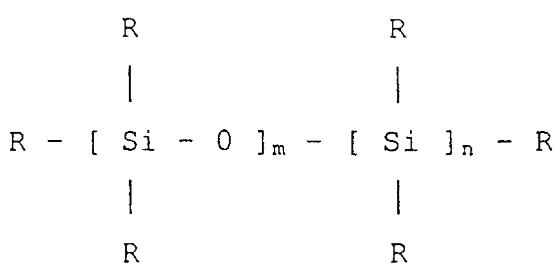

enthalten, wobei m und p unabhängig voneinander ganze Zahlen > 0, sind, n 1 ist, jeder der Reste R und $R_1$ unabhängig voneinander ein H-Atom oder eine substituierte oder unsubstituierte Alkylgruppe, eine Gruppe der Formel = $CR'_2$, -$CR'_2$-OR', -OR', -COOR',-$SiR'_3$ oder eine gegebenenfalls mit einer oder zwei -CR' = $CR'_2$-Gruppen substituierte Phenylgruppe oder eine Bindung zur Einheit I oder II sein kann, wobei jeder der Reste R' unabhängig voneinander ein

H-Atom oder eine substituierte oder unsubstituierte Alkylgruppe sein kann, mit der Maßgabe, daß die Einheiten der Formel II mindestens eine SiH-Gruppe enthalten und daß die Einheiten der Formel I mit den Einheiten der Formel II über C-Si-Bindungen verknüpft sind. Vorzugsweise weisen die Alkylgruppen 1, 2, 3, 4, 5, 6, 7 oder 8, vorzugsweise 1, 2, 3, 4, 5 oder 6 C-Atome auf, die besonders bevorzugt linear angeordnet sind. Beispiele für die Alkylgruppen sind Methyl-, Ethyl-, n-Propyl-, i-Propyl-, n-Butyl-, i-Butyl-, n-Penyl- und n-Hexyl-Gruppen.

Ein Durchschnittsfachmann wird die Substituenten gemäß seinem Fachwissen dabei so auswählen, daß keine aus sterischen oder anderen Gründen sinnlosen Kombinationen von Substituenten entstehen. Insbesondere sollten pro dargestellter Einheit der Formel I oder II maximal zwei, vorzugsweise nur eine oder auch keine sterisch anspruchsvolle Gruppe wie eine t-Butylgruppe ausgewählt werden.

Z.B. weisen m und p unabhängig voneinander die Werte 1, 2, 3, 4, 5, 6, 7, 8 oder 9 auf. Sie können aber auch Werte von 10 bis 100 und mehr aufweisen.

Diese Haftvermittler sind z.B. durch das vorstehende Verfahren erhältlich. Gemäß einer Ausführungsform sind die Reste R und $R_1$ also so definiert, wie sie sich durch Umsetzung der in dieser Anmeldung definierten Si-H-Gruppen-haltigen Siloxane und Vinylgruppen-haltigen Verbindungen ergeben.

Arylgruppen können substituiert oder unsubstituiert sein und z.B. 1, 2, 3, oder 4 kondensierte aromatische Ringe mit jeweils z. B. 4, 5, 6, 7, 8, 9 und/oder 10 C-Atomen und bis zu zwei N, O, oder S-Atomen aufweisen.

Als Substituenten der substituierten Alkylgruppen oder Arylgruppen können z.B. $C_1$-$C_6$-Alkylgruppen, Vinylgruppen, Allylgruppen, Arylgruppen, -OH-, -$NO_2$-, -$NH_2$-, -CN-, -$SO_2$-, -COOH-, -CO-O-$C_1$-$C_6$-Alkyl-, -$CONH_2$- oder -$C_1$-$C_6$-Acylgruppen erwähnt werden.

Erfindungsgemäß können die Reste R, $R_1$ oder R' unabhängig voneinander mindestens eine weitere funktionelle Gruppe enthalten, wobei als weitere funktionelle Gruppen Hydrogensilyl-, Alkoxysilyl-, Epoxy-, Säure oder Aziridin-Gruppen bevorzugt werden. Als Säuregruppen werden z.B. Phosphor-haltige Säuregruppen wie Phosphorsäure- oder Phosphonsäuregruppen, oder C1-C6-Carbonsäuregruppen bevorzugt. Vorzugsweise stellen die Reste R, $R_1$ oder R jedoch höchstens eine, vorzugsweise keine weiter Vinylgruppe dar, da die Haftmittel sonst gegebenenfalls zu stark vernetzt würden.

Die Haftvermittler weisen vorzugsweise ein durchschnittliches Gewichtsmittel des Molekulargewichts von 5.000 - 1.000.000, besonders bevorzugt von 20.000 - 200.000 auf.

Vorzugsweise weisen die erfindungsgemäßen Haftvermittler die Einheiten (I:II) in einem Verhältnis von 25:1 bis zu 1:25 oder 10:1 bis zu 1:10 oder 5:1 bis zu 1:5, insbesondere auch 5:1 bis zu 2:1 auf. Die Grundketten weisen vorzugsweise mindestens 50 der vorstehenden Einheiten I und/oder II auf.

Erfindungsgemäße Haftvermittler eignen sich auch als Vernetzerkomponenten in additionsvernetzenden Siliconformulierungen und als Ausgangssubstanz für Propfpolymere.

Die Haftvermittler der Erfindung können durch einfache Copolymerisation von ungesättigten Verbindungen in Gegenwart von Hydrogensiloxanen hergestellt werden. Vorzugsweise werden dabei photochemische (photosensitive) oder thermische Radikalbildner als Polymerisationskatalysatoren eingesetzt.

Bei der zugrundeliegenden Copolymerisation handelt es sich vermutlich um eine Kombination einer Polymerisation mit einer gleichzeitig ablaufenden Hydrosilierung:

Es wird angenommen, daß sich im Falle einer radikalischen Polymerisation einerseits Alkylen-Radikalkettenbruchstücke (A) durch Polymerisation eines Teils der ungesättigten Gruppen bilden,

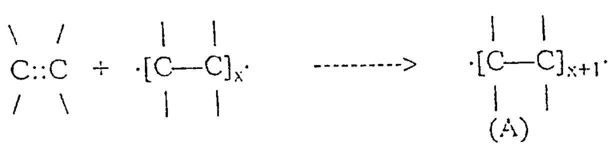

x = beliebig,

andererseits Hydrogensiloxan-Radikalbruchstücke (B) durch Reaktion mit Polyalkylen-Radikalen,

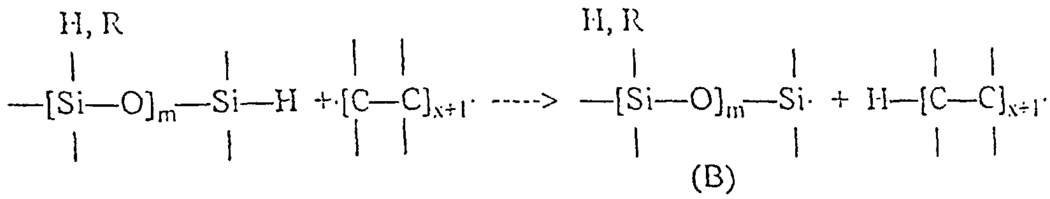

(B)

gebildet werden (radikalische Hydrosylierung), die mit weiteren ungesättigten Verbindungen zu längeren Radikalketten regieren

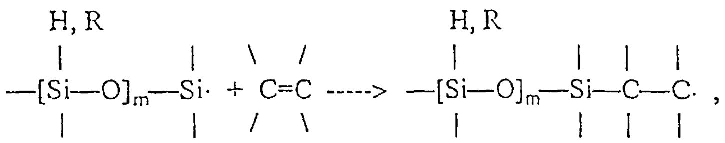

oder mit Polyalkylenradikalen rekombinieren können.

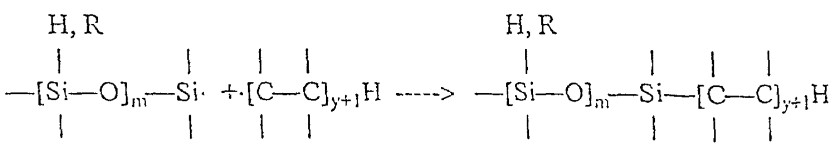

Dabei können auch mehrere SiH-Gruppen eines Hydrogensiloxans in die Polymerketten eingebunden werden:

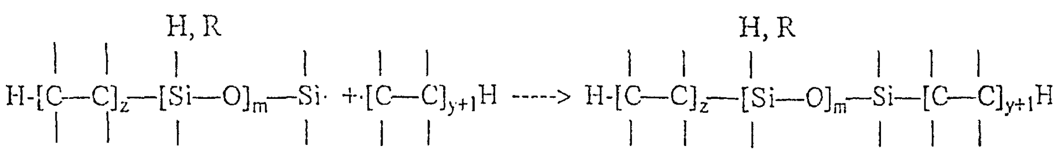

m, y, z = beliebige ganze Zahl, m bevorzugt 1 bis 5, Weitere Reaktions-/Kombinationsmöglichkeiten sind denkbar und wahrscheinlich.

Vereinfachend kann formuliert werden, daß die bei der radikalischen Polymerisation entstehenden Haftvermittler aus Kombinationen von verschiedenen Polyalkylen-Kettenbruchstücken und verschiedenen Hydrogensiloxan-Bruchstücken bestehen können:

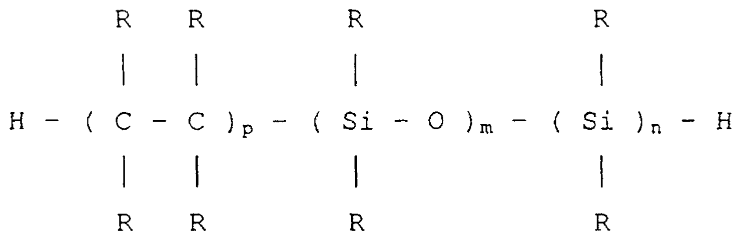

Ein erfindungsgemäßer Haftvermittler kann z.B. die Formel

$$[\text{Polyalkylen}]_u[\text{Siloxan-SiH}]_V$$

aufweisen, wobei das Verhältnis der Zahl der verknüpften [Polyalkylen]-Bruchstücke und der verknüpften [SiH-Siloxan]-Bruchstücke je nach Ausgangskonzentrationen von Hydrogensiloxanen und ungesättigten Verbindungen gleich, verschieden und beliebig sein kann.

Die [SiH-Siloxan]-Einheiten können entweder seitenständig oder endständig verknüpft an die C-C-Ketten (Polyalkylenteil) gebunden sein.

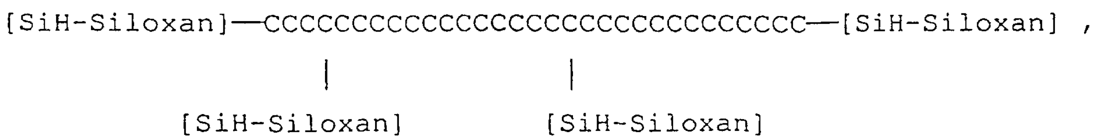

sie können aber auch zwei- oder mehrseitig verknüpft als Siloxan-Einheiten integraler Teil des Kettengerüstes:

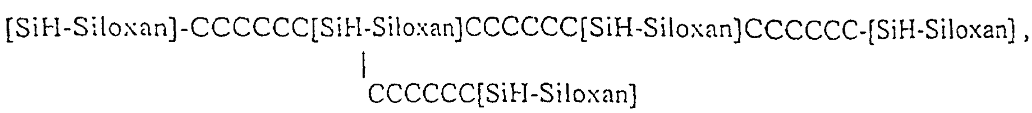

sowie Mischungen aller Typen sein.

In allen Fällen sind die Hydrogensiloxankettenteile über hydrolysebeständige Si-C-Bindungen an die Alkylenkettenteile geknüpft und sind z.B. als

$-C-C-[SiO]_nSi-$, als $-C-C-[SiO]_nSi-C-C-$ oder als 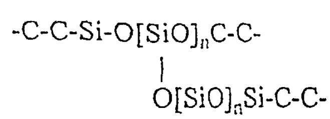

integraler Bestandteil der Copolymergerüstkette.

In der Si-C-Verknüpfung liegt offenbar der Grund für die extrem gute und dauerhafte Hydrolysebeständigkeit bei der Anwendung der erfindungsgemäßen Haftvermittler in Adhesiv-Formulierungen (Klebstoff-, Haftmittel-Formulierungen) in feuchtem Milieu.

Die eingesetzten Hydrogensiloxane, also Verbindungen, die die Gruppe

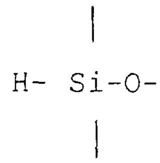

enthalten, sind handelsüblich als Vernetzer für platinkatalysierte, additionsvernetzende Vinylsilicone zu erhalten. Sie sind in der Regel kurzkettige Polysiloxane mit 2 bis 9 Siliciumwasserstoffgruppen. Für die erfindungsgemäße Verwendung sollte das Hydrogensiloxan mindestens 2 SiH-Gruppen enthalten, vorteilhafter drei, vier oder mehr.

Als ungesättigte Verbindungen, die z.B. Einheiten der Formel I ergeben, eignen sich besonders solche Verbindungen, die sich leicht polymerisieren lassen: $\alpha,\beta$-ungesättigte Ester, Anhydride und Amide, aromatische Vinylverbindungen, Vinylether, Vinylsilane und Allylverbindungen. Insbesondere eignen sich monofunktionelle, ungesättigte Verbindungen wie Methylmethacrylat, Ethylmethacrylat, Butyl(meth)acrylat, Acrylnitril, Vinylbenzol, Monovinylether und Vinyldiphenylsilan, davon bevorzugt Vinyldiphenylhydrogensilan.

Interessante Haftvermittler mit zusätzlichen Reaktionsgruppen lassen sich erhalten, wenn die ungesättigte Verbindung noch mindestens eine Reaktionsgruppe enthält, welche nicht an der Polymerisation teilnimmt und somit nach Herstellung des Haftvermittlers in diesem vorhanden ist. So ergibt eine Polymerisation von Hydrogensiloxanen mit Glycidylmethacrylat einen Haftvermittler, welcher neben den SiH-Gruppen noch Epoxygruppen enthält. Eine Polymerisation von Hydrogensiloxanen mit Vinyltriethoxysilan ergibt einen Haftvermittler, welcher neben SiH-Gruppen noch Si $(OC_2H_5)_3$-Gruppen enthält.

Die erfindungsgemäßen Haftvermittler bzw. deren Lösungen werden als Adhesive zur dauerhaften Verbindung von Zahnprothesen auf Siliconunterfütterungen für Zahnprothesen verwendet, wobei es sich bei den Siliconunterfütterungen insbesondere um weichbleibende Siliconunterfütterungen wie additionsvernetzende Vinylsilicone handelt.

Weiter können die Haftvermittler bzw. deren Lösungen als Adhesive zur Verbindung von additionsvernetzenden Vinylsiliconabformmassen auf Abformlöffeln verwendet werden. Auch haften die Haftvermittler gut auf unedlen Metallen wie Aluminium, auf Glas, Keramik und erstaunlicherweise auch auf Zähnen und Knochensubstanz. Somit können die Haftvermittler auch dazu verwendet werden, Metalle, Zähne etc. haftend zu beschichten oder mit gleichen oder anderen Materialien zu verbinden oder zu verkleben. So können auch härtende Siliconmischungen auf Zähnen befestigt werden.

Die Eigenschaften der erfindungsgemäßen Haftvermittler und von deren Lösungen werden in starkem Maße durch die Verhältnisse der verschiedenen sich wiederholenden strukturellen Einheiten des Haftvermittlers bestimmt. Bei den erfindungsgemäßen Verwendungen als Adhesive sind die (Poly)alkylenteile z.B. wichtig, um sich mit anzulösenden, zu verbindenden Kunststoffen innig in Microbereichen zu vermischen, andererseits begünstigt eine Vielzahl an SiH-Gruppen der Siloxaneinheiten in und an dem Kettengerüst der Haftvermittler eine gute Einbindung in ein darauf appliziertes Vinylsilicon. Das Verhältnis von SiH-Siloxan- zu Polyalkylenanteilen im Haftvermittler sollte bei vorteilhaften Ausführungen mindestens bei 1 : 25, vorzugsweise bei 1 : 25 bis zu 25 : 1, bei bevorzugten Ausführungen mindestens bei 1 : 10 bis zu 10 : 1, bei besonders bevorzugten Ausführungen mindestens bei 1 : 5 bis zu 5 : 1 liegen, wobei insbesondere 5:1 bis zu 2:1 bevorzugt wird.

Geeignete Polymerisationskatalysatoren für die Herstellung der Haftvermittler sind thermische Radikalbildner wie Dibenzoylperoxid, Dibutylperoxid, Acetylcyclohexylsulfonylperoxid, Azobisisobutyronitril, Azobismethylpropan, Azobismethoxydimethylvaleronitril sowie gegebenenfalls entsprechende Co-Initiatoren wie Amine oder Sulfinsäuresalze.

Geeignete Poylmerisationskatalysatoren können auch photochemische (photosensitive) Radikalbildner sein wie Benzophenone, Benzoine, $\alpha,\beta$-Diketone sowie geeignete Co-Initiatoren.

Geeignete Katalysatoren können auch nichtradikalische Polymerisationskatalysatoren sein wie Triisobutylaluminium, Lithiumaluminiumtetrahydride oder Titanchloride, aber besonders bevorzugt sind die radikalischen Polymerisationskatalysatoren.

Die erfindungsgemäßen Haftvermittler können zur Bildung einer Lösung mit mindestens einem halogenierten oder nichthalogenierten aliphatischen oder aromatischen Kohlenwasserstoff, Ether, Keton, Ester oder cyclischen Siloxan, insbesondere Aceton versetzt werden.

Die erfindungsgemäßen Haftvermittler können auch für andere Zwecke als die angeführten zu erfindungsgemäßen Anwendungen kommen wie z.B. als Vernetzerkomponenten in additionsvernetzenden Vinylsiliconmischungen oder auch als Ausgangskomponenten zur Herstellung von durch Aufpropfung weiter modifizierter Copolymere, bei denen die SiH-Gruppen oder andere mit einpolymerisierte reaktive Gruppen als Verknüpfungspunkt zum Aufpropfen anderer funktioneller Gruppen dienen kann. Auch diese Verwendungen sind erfindungsgemäß.

Anhand nachstehender beispielhafter Ausführungen soll die Erfindung näher erläutert werden.

Beispiel 1:

**Herstellung eines erfindungsgemäßen Haftvermittlers**

Zu einer Lösung aus 20g Ethylmethacrylat, 40g mehrfunktionellem Hydrogensiloxan (Vernetzer 430 der Bayer AG) und 40g Toluol werden 0,3 g Benzoylperoxid hinzugegeben. Die Lösung wird für 2 Stunden auf 90°C erhitzt. Nach Abkühlen auf Raumtemperatur wird das Toluol unter vermindertem Druck abgedampft und der verbleibende Rest mit einer Mischung aus Ethanol/Methanol 1:1 vernetzerfrei gewaschen. Es wird ein gelartiges Polymer erhalten.

Beispiel 2:

**Adhesivlosung zum Kleben von weichbleibendem Unterfütterungssilicon auf Prothesenmaterial.**

Zwecks Herstellung einer erfindungsgemäßen Adhesivlösung werden 10 Teile des erhaltenen Polymers in 90 Teilen Aceton gelöst. Die so erhaltene Adhesivlösung wird auf den gesäuberten, angeschliffenen Prothesenkunststoff einer zu unterfütternden Prothese dunn aufgepinselt. Nach Ablüften des Lösungsmittels (ca. 30 sec) wird umgehend semitransparentes additionsvernetzendes Vinylsiliconmaterial einer Shore-A-Härte von ca. 30 in dünner Schicht auf die adhesivbehandelte Fläche gegeben und in den Mund verbracht. Nach Abwarten der Erhärtungszeit des Silicons von 3 Minuten wird die Prothese aus dem Munde genommen. Das Vinylsilicon ist fest mit der Prothese verbunden. Versuche, das Material wieder vom Prothesenkunststoff abzulösen enden mit einem Einreißen des Siliconunterfütterungsmaterial, aber nicht mit einem Abreißen des Silicons von der Prothesenbasis.

Auch bei einer Dauerlagerung der erfindungsgemäß unterfütterten Prothese in Wasser von 40°C über 4 Wochen und sowie bei gleicher Lagerung in täglich gewechselten Prothesenreinigungslösungen (Corega-Tabs) zeigten sich keinerlei Schwächung der festen Verbindung zwischen Unterfütterungssilicon und Prothese.

Beispiel 3:

**Adhesivlösung zum Fixieren von Abformvinylsilicon auf Abformlöffeln**

Das Adhesivlösung aus Beispiel 1 wird in dünner Schicht auf einen handelsüblichen Kunststoffabformlöffel (Polycarbonat), der nicht die sonst üblichen mechanischen Retentionen (Löcher, Leisten) enthält, aufgetragen und 1 min trocknen gelassen.

Darauf wird der Löffel mit additionvernetzendem Abformsilicon beladen und in den Mund verbracht. Nach Ende der Erhärtungszeit wird der Löffel aus dem Mund entnommen. Die Abformmasse ist so fest mit dem Abformlöffel verbunden, daß sie nur unter Zerstörung wieder vom Abformlöffel entfernt werden kann.

## Patentansprüche

1. Haftvermittler, erhältlich durch die Copolymerisation von SiH-Gruppen-haltigen Siloxanen mit ungesättigten Verbindungen, **dadurch gekennzeichnet, daß** die Haftvermittler mindestens eine SiH-Gruppe enthalten und daß die SiH-Gruppen-haltigen Siloxane und die ungesättigten Verbindungen über C-Si-Bindungen miteinander verknüpft sind.

2. Haftvermittler, **dadurch gekennzeichnet, daß** sie sich wiederholende strukturelle Einheiten

   a) der Formel

(I)

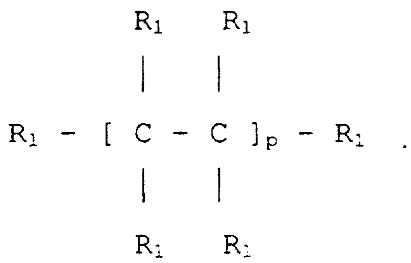

und

b) der Formel

(II)

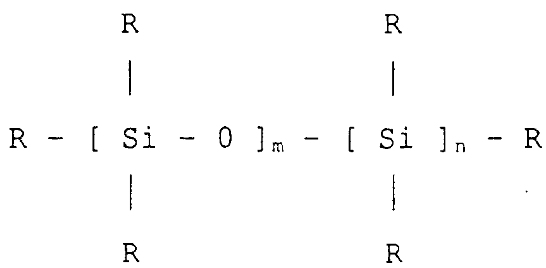

enthalten, wobei m und p unabhängig voneinander ganze Zahlen > 0 sind, n 1 ist, jeder der Reste R und $R_1$ unabhängig voneinander ein H-Atom, eine substituierte oder unsubstituierte Alkylgruppe, eine Gruppe der Formel = $CR'_2$, $-CR'_2-OR'$, -OR', -COOR', $-SiR'_3$ oder eine gegebenenfalls mit einer oder zwei -CR'= $CR'_2$-Gruppen substituierte Phenylgruppe oder eine Bindung ist, wobei jeder der Reste R' unabhängig voneinander ein H-Atom oder eine substituierte oder unsubstituierte Alkylgruppe sein kann, mit der Maßgabe, daß die Gruppen der Formel II mindestens eine Si-H-Gruppe enthalten und daß die Einheiten der Formel I mit den Einheiten der Formel II über C-Si-Bindungen verknüpft sind.

3. Haftvermittler nach Anspruch 2, **dadurch gekennzeichnet, daß** die Alkylgruppen substituierte Alkylgruppen sind.

4. Haftvermittler nach einem der Ansprüche 2 oder 3, **dadurch gekennzeichnet, daß** die Alkylgruppen 1, 2, 3, 4, 5, 6, 7 oder 8 C-Atome aufweisen.

5. Haftvermittler nach einem der Ansprüche 1 - 4, **dadurch gekennzeichnet, daß** die Vinylgruppen-haltigen Verbindungen (Formel I) Acrylate, Vinylbenzole, Vinylether, Allylverbindungen, Vinylsilane oder Derivate oder Mischungen von diesen sind.

6. Haftvermittler nach einem der Ansprüche 1 - 5, **dadurch gekennzeichnet, daß** die Vinylgruppen-haltigen Verbindungen Monoacrylate, Monovinylbenzole, Monovinylether, Monoallylverbindungen, Monovinylsilane oder Derivate oder Mischungen von diesen sind.

7. Haftvermittler nach einem der Ansprüche 1 - 6, **dadurch gekennzeichnet, daß** die Vinylgruppen-haltigen Verbindungen mindestens eine weitere funktionelle Gruppe enthalten.

8. Haftvermittler nach Anspruch 7, **dadurch gekennzeichnet, daß** die weiteren funktionellen Gruppen Hydrogensilyl-, Alkoxysilyl-, Epoxy-, Säure- oder Aziridin-Gruppen sind.

**9.** Haftvermittler nach einem der Ansprüche 1 - 8, **dadurch gekennzeichnet, daß** das Verhältnis von SiH-Gruppenhaltigen Siloxanen zu Vinylgruppen-haltigen Verbindungen 1 : 25 bis zu 25 : 1 beträgt.

**10.** Haftvermittler nach einem der Ansprüche 1 - 8, **dadurch gekennzeichnet, daß** das Verhältnis von SiH-Gruppenhaltigen Siloxanen zu Vinylgruppen-haltigen Verbindungen 1 : 10 bis zu 10 : 1 beträgt.

**11.** Haftvermittler nach einem der Ansprüche 1 - 9, **dadurch gekennzeichnet, daß** das Verhältnis von SiH-Gruppenhaltigen Siloxanen zu Vinylgruppen-haltigen Verbindungen 1 : 5 bis zu 5 : 1 beträgt.

**12.** Haftvermittler nach einem der Ansprüche 1-11, **dadurch gekennzeichnet, daß** bei der Umsetzung als Polymerisationkatalysatoren thermische Radikalbildner eingesetzt werden.

**13.** Haftvermittler nach einem der Ansprüche 1-11, **dadurch gekennzeichnet, daß** bei der Umsetzung als Polymerisationskatalysatoren photosensitive Radikalbildner eingesetzt werden.

**14.** Haftvermittlerlösungen, **dadurch gekennzeichnet, daß** sie mindestens einen Haftvermittler nach einem der Ansprüche 1 bis 13 und zusätzlich mindestens einen halogenierten oder nichthalogenierten, aliphatischen oder aromatischen Kohlenwasserstoff, Ether, Keton, Ester oder ein cyclisches Siloxan, insbesondere Aceton enthalten.

**15.** Verwendung von Haftvermittlern oder Haftvermittlerlösungen nach einem der Ansprüche 1 bis 14 zum Verbinden von anlösbaren Kunststoffen und Siliconen.

**16.** Verwendung von Haftvermittlern oder Haftvermittlerlösungen nach einem der Ansprüche 1 bis 14 zum Verbinden von Zahnprothesen und Siliconunterfütterungen für Zahnprothesen.

**17.** Verwendung nach Anspruch 16, **dadurch gekennzeichnet, daß** es sich bei den Siliconunterfütterungen um weichbleibende Siliconunterfütterungen handelt.

**18.** Verwendung nach Anspruch 16 oder 17, **dadurch gekennzeichnet, daß** es sich bei den Siliconunterfütterungen um additionsvernetzende Vinylsilicone handelt.

**19.** Verwendung von Haftvermittlern oder Haftvermittlerlösungen nach einem der Ansprüche 1 bis 14 zum Verbinden von additionsvernetzenden Vinylsiliconabformmassen und Abformlöffeln.

**20.** Verwendung von Haftvermittlern oder Haftvermittlerlösungen nach einem der Ansprüche 1 bis 14 als haftender Überzug auf unedlen Metallen, Glas und Keramik.

**21.** Verwendung von Haftvermittlern oder Haftvermittlerlösungen nach einem der Ansprüche 1 bis 14 zur Herstellung eines haftenden Überzugs zum Beschichten von Zähnen und Knochensubstanz.

## Claims

**1.** Adhesion promoters, obtainable by the copolymerisation of SiH-group-containing siloxanes with unsaturated compounds, **characterised in that** the adhesion promoters comprise at least one SiH group and that the SiH-group-containing siloxanes and the unsaturated compounds are linked to one another *via* C-Si bonds.

**2.** Adhesion promoters, **characterised in that** they comprise repeating structural units

a) of the formula

(I)

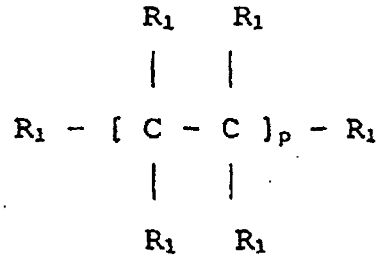

and
b) of the formula

(II),

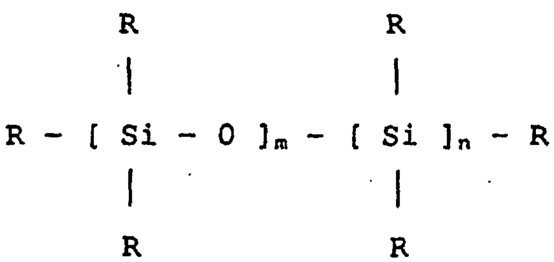

wherein m and p are each, independently of the other, whole numbers > 0, n is 1, each of the radicals R and $R_1$ independently of the others is a H atom, a substituted or unsubstituted alkyl group, a group of the formula $=CR'_2$, $-CR'_2-OR'$, $-OR'$, $-COOR'$, $-SiR'_3$, or a phenyl group optionally substituted by one or two $-CR'=CR'_2$ groups, or is a bond, each of the radicals R' independently of the others being a H atom or a substituted or unsubstituted alkyl group, with the proviso that the groups of the formula II contain at least one Si-H group and that the units of the formula I are linked to the units of the formula II *via* C-Si bonds.

**3.** Adhesion promoters according to claim 2, **characterised in that** the alkyl groups are substituted alkyl groups.

**4.** Adhesion promoters according to either claim 2 or 3, **characterised in that** the alkyl groups have 1, 2, 3, 4, 5, 6, 7 or 8 carbon atoms.

**5.** Adhesion promoters according to any one of claims 1 to 4, **characterised in that** the vinyl-group-containing compounds (formula I) are acrylates, vinyl benzenes, vinyl ethers, allyl compounds, vinyl silanes or derivatives or mixtures thereof.

**6.** Adhesion promoters according to any one of claims 1 to 5, **characterised in that** the vinyl-group-containing compounds are monoacrylates, monovinyl benzenes, monovinyl ethers, monoallyl compounds, monovinyl silanes or derivatives or mixtures thereof.

**7.** Adhesion promoters according to any one of claims 1 to 6, **characterised in that** the vinyl-group-containing compounds contain at least one further functional group.

**8.** Adhesion promoters according to claim 7, **characterised in that** the further functional groups are hydrogen silyl, alkoxysilyl, epoxy, acid or aziridine groups.

9. Adhesion promoters according to any one of claims 1 to 8, **characterised in that** the ratio of SiH-group-containing siloxanes to vinyl-group-containing compounds is from 1:25 to 25:1.

10. Adhesion promoters according to any one of claims 1 to 8, **characterised in that** the ratio of SiH-group-containing siloxanes to vinyl-group-containing compounds is from 1:10 to 10:1.

11. Adhesion promoters according to any one of claims 1 to 9, **characterised in that** the ratio of SiH-group-containing siloxanes to vinyl-group-containing compounds is from 1:5 to 5:1.

12. Adhesion promoters according to any one of claims 1 to 11, **characterised in that** thermal free radical formers are used as polymerisation catalysts in the reaction.

13. Adhesion promoters according to any one of claims 1 to 11, **characterised in that** photosensitive free radical formers are used as polymerisation catalysts in the reaction.

14. Adhesion promoter solutions, **characterised in that** they comprise at least one adhesion promoter according to any one of claims 1 to 13 and additionally at least one halogenated or non-halogenated, aliphatic or aromatic hydrocarbon, ether, ketone, ester or a cyclic siloxane, especially acetone.

15. Use of adhesion promoters or adhesion promoter solutions according to any one of claims 1 to 14 for the bonding of partially dissolvable plastics to silicones.

16. Use of adhesion promoters or adhesion promoter solutions according to any one of claims 1 to 14 for the bonding of dental prostheses to silicone relinings for dental prostheses.

17. Use according to claim 16, **characterised in that** the silicone relinings are non-hardening silicone relinings.

18. Use according to claim 16 or 17, **characterised in that** the silicone relinings are addition-crosslinking vinyl silicones.

19. Use of adhesion promoters or adhesion promoter solutions according to any one of claims 1 to 14 for the bonding of addition-crosslinking vinyl silicone impression compositions to impression trays.

20. Use of adhesion promoters or adhesion promoter solutions according to any one of claims 1 to 14 as an adhesive coating on base metals, glass and ceramics.

21. Use of adhesion promoters or adhesion promoter solutions according to any one of claims 1 to 14 in the preparation of an adhesive coating for coating teeth and bone tissue.

## Revendications

1. Agents adhésifs susceptibles d'être obtenus par copolymérisation de siloxanes à groupes SiH et de composés insaturés, **caractérisés par le fait que** les agents adhésifs contiennent au moins un groupe SiH et que les siloxanes à groupes SiH et les composés insaturés sont liés les uns aux autres par l'intermédiaire de liaisons SiC.

2. Agents adhésifs **caractérisés par le fait qu'**ils contiennent des motifs constitutifs récurrents

    a) de formule

(I) 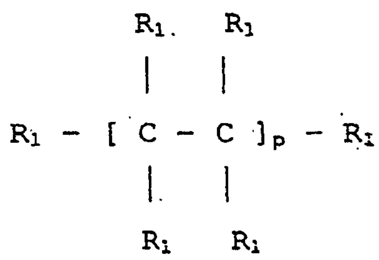

et

b) de formule

(II) 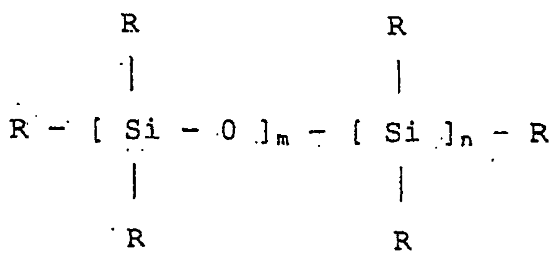

où m et p représentent chacun indépendamment un nombre entier supérieur à 0, n vaut 1, chacun des résidus R et $R_1$ représente indépendamment un atome d'hydrogène, un groupe alkyle substitué ou non substitué, un groupe de formule $=CR'_2$, $-CR'_2-OR'$, $-OR'$, $-COOR'$, $-SiR'_3$ ou un groupe phényle portant éventuellement un ou deux groupes $-CR'=CR'_2$, ou une liaison, où chacun des résidus R' représente indépendamment un atome d'hydrogène ou un groupe alkyle substitué ou non substitué, avec la réserve que les groupes de formule (II) comportent au moins un groupe SiH et que les motifs de formule (I) sont liés aux motifs de formule (II) par l'intermédiaire de liaisons C-Si.

3. Agents adhésifs selon la revendication 2, **caractérisés par le fait que** les groupes alkyle sont des groupes alkyle substitués.

4. Agents adhésifs selon l'une des revendications 2 ou 3, **caractérisés par le fait que** les groupes alkyle comportent 1, 2, 3, 4, 5, 6, 7 ou 8 atomes de carbone.

5. Agents adhésifs selon l'une des revendications 1 à 4, **caractérisés par le fait que** les composés à groupes vinyles (formule (I)) sont des acrylates, des vinylbenzènes, des vinyléthers, des composés à groupes allyles, des vinylsilanes ou des dérivés ou mélanges de ceux-ci.

6. Agents adhésifs selon l'une des revendications 1 à 5, **caractérisés par le fait que** les composés à groupes vinyles sont des monoacrylates, des monovinylbenzènes, des monovinyléther, des composés comportant un seul groupe allyle, des monovinylsilanes ou des dérivés ou mélanges de ces composés.

7. Agents adhésifs selon l'une des revendications 1 à 6, **caractérisés par le fait que** les composés à groupes vinyle comportent au moins un groupe fonctionnel supplémentaire.

8. Agents adhésifs selon la revendication 7, **caractérisés par le fait que** les autres groupes fonctionnels sont des groupes hydrogénosilyle, alcoxysilyle, époxy, acide ou aziridine.

9. Agents adhésifs selon l'une des revendications 1 à 8, **caractérisés par le fait que** le rapport des siloxanes à groupes SiH aux composés à groupes vinyle est de 1/25 à 25/1.

10. Agents adhésifs selon l'une des revendications 1 à 8, **caractérisés par le fait que** le rapport des siloxanes à groupes SiH aux composés à groupes vinyle est de 1/10 à 10/1.

11. Agents adhésifs selon l'une des revendications 1 à 9, **caractérisés par le fait que** le rapport des siloxanes à

groupes SiH aux composés à groupes vinyle est de 1/5 à 5/1.

**12.** Agents adhésifs selon l'une des revendications 1 à 11, **caractérisés par le fait que** l'on utilise, pour la réaction, des amorceurs radicalaires thermiques en tant que catalyseurs de polymérisation.

**13.** Agents adhésifs selon l'une des revendications 1 à 11, **caractérisés par le fait que** l'on utilise, pour la réaction, des photoamorceurs radicalaires en tant que catalyseurs de polymérisation.

**14.** Solutions d'agents adhésifs, **caractérisées par le fait qu'**elles contiennent au moins un agent adhésif selon l'une des revendications 1 à 13 et, en outre, au moins un hydrocarbure aromatique ou aliphatique, halogéné ou non halogéné, un éther, une cétone, un ester ou un siloxane cyclique, en particulier de l'acétone.

**15.** Utilisation d'agents adhésifs ou de solutions d'agents adhésifs salon l'une des revendications 1 à 14 pour coller des matières plastiques solubles en surface et silicones.

**16.** Utilisation d'agents adhésifs ou de solutions d'agents adhésifs selon l'une des revendications 1 à 14, pour coller des prothèses dentaires et des doublures en silicone pour prothèses dentaires.

**17.** Utilisation selon la revendication 16, **caractérisée par le fait que** les doublures en silicone sont des doublures en silicone durablement souples.

**18.** Utilisation selon la revendication 16 ou 17, **caractérisée par le fait que** les doublures en silicone sont des vinylsilicones réticulables par réaction d'addition.

**19.** Utilisation d'agents adhésifs ou de solutions d'agents adhésifs selon l'une des revendications 1 à 14 pour le collage de cuillères de moulage et de masses de moulage à base de vinylsilicone réticulables par réaction d'addition.

**20.** Utilisation d'agents adhésifs ou de solutions d'agents adhésifs selon l'une des revendications 1 à 14 en tant que revêtement adhésif sur des métaux non-nobles, du verre et de la céramique.

**21.** Utilisation d'agents adhésifs ou de solutions d'agents adhésifs selon l'une des revendications 1 à 14 pour la préparation d'une couche adhésive pour le revêtement de dents et de substance osseuse.